# FASCICULE DE BREVET EUROPEEN

(11) **EP 2 289 673 B1**
(45) Date de publication et mention de la délivrance du brevet: **29.02.2012**
(21) Numéro de dépôt: 10014292.6
(22) Date de dépôt: 09.11.2009
(51) Int. Cl.: B26B 25/00, B23D 21/08, B26D 3/16, B25B 7/22

(54) **Système fixe-coupe, portable, automatisé**
Automatisiertes, tragbares System zum Befestigen und Abschneiden
Portable, automated cup-fixing system

(30) Priorité: 21.11.2008 FR 0806534
(43) Date de publication de la demande: 02.03.2011
(62) Demande divisionnaire de: 09356057.1
(73) Titulaire: Juston, Robert, 69003 Lyon (FR)
(72) Inventeur: Juston, Robert, 69003 Lyon (FR)
(74) Mandataire: Schmidt, Martin Peter

(56) Documents cités:
- WO-A-2005/008078
- GB-A- 2 333 486
- US-A- 4 176 450
- US-A- 4 177 557

## Description

### Domaine technique de l'invention:

L'invention concerne le domaine de la coupe de matériaux ( ou objets ) de taille moyenne : d'un diamètre ou d'une longueur d'au maximum 10 centimètres.

### Etat de la technique:

Habituellement, la coupe de matériaux (ou objets) de taille moyenne s'effectue avec une lame coupante circulaire ou plane à laquelle on applique un mouvement rotatif ou de va-et-vient, et, le plus souvent perpendiculairement à l'axe principal de l'objet à découper ; en ce qui concerne le sécateur, la coupe se réalise par écrasement entre 2 lames planes coupantes parallèles. Les outils à main de coupe disponibles nécessitent le plus souvent un effort de maintien de l'objet à couper ce qui n'est pas toujours compatible avec la qualité de coupe attendue.

Le document WO 20051008078 décrit un dispositif de coupe portable, mécanisé comportant un boîtier à l'intérieur duquel est agencé un moteur électrique d'entraînement d'un outil de coupe rotatif, ainsi qu'une pince de fixation d'un objet à couper, la pince étant reliée au boîtier par une articulation pivotante. Les caractéristiques connues de ce document se retrouvent dans le préambule de la première revendication.

### Exposé de l'invention:

L'invention est un outil de coupe, portable, mécanisé, autonome (outil à main), sécurisé, qui permet de réaliser rapidement la coupe de divers types de matériaux (plans ou cylindriques) de taille moyenne (diamètre ou longueur de 10 centimètres au maximum) avec une grande qualité de coupe. L'invention consiste à introduire un " système mécanique de coupe rotatif léger "(5) (avec lame rotative (6)) dans un"système portable de fixation "- une pince (1) grâce à deux glissières à roulements parallèles:

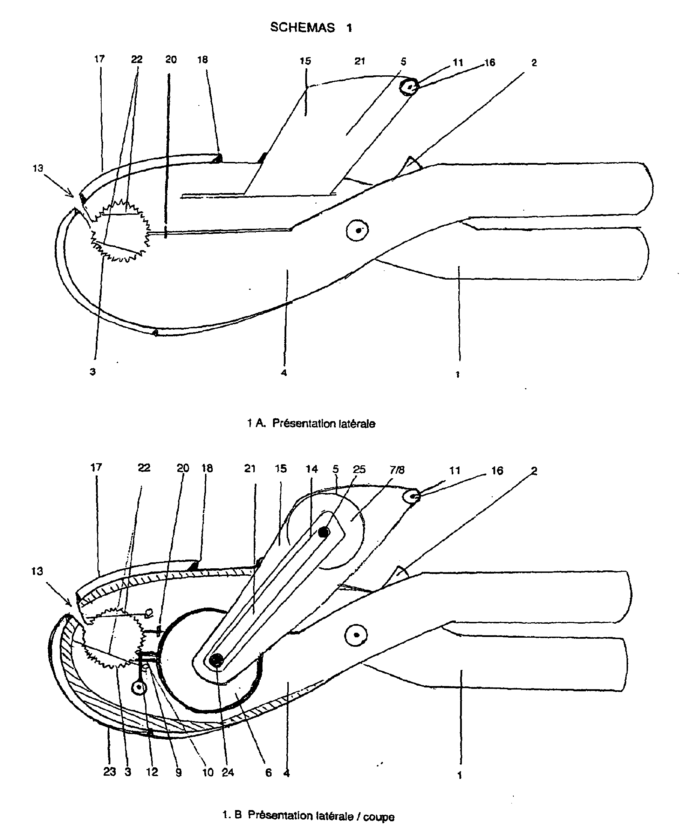

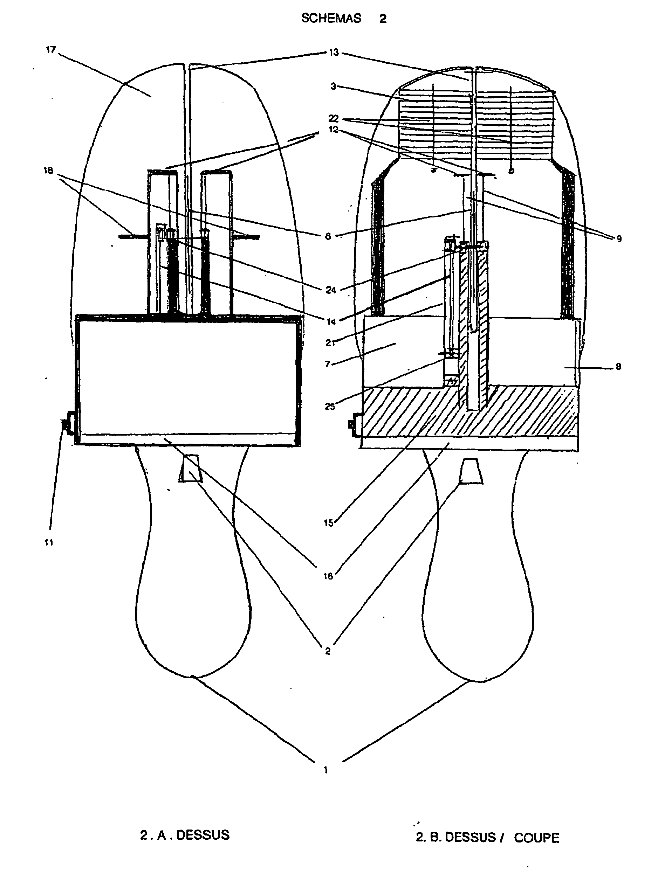

Les dessins 1 A et 2 A représentent la vision externe du dispositif, les 1 B et 2 B permettent de voir le détail du système de coupe.

L'outil comporte une pince manuelle (1) à ressort ou à cliquet (2) , avec des mâchoires (3) (dont la configuration est adaptée à l'usage de l'outil), avec 2 bras rigides "haut" et "bas" (chacun en forme de fourche), la fourche "basse" (4) comporte dans " la partie -inférieurelpostérieure - des mâchoires "(3 ) deux accès (10) fermés à vis et qui constituent l'entrée de 2 glissières à roulements (9) parallèles ; les glissières à roulements (9) supportent "un système mécanique de coupe rotatif léger (5)", qui se présente sous la forme d'un arceau métallique rigide en forme de "n" (15) et qui comporte : dans la partie "antérieure basse" un axe rotatif (24) sur lequel est fixé perpendiculairement une lame circulaire coupante (6) spécifique aux matériaux à couper (placée à l'intérieur des fourches), l'axe (24) est relié par une courroie (14) (ou une chaîne) à "l'axe d'entraînement moteur" (25), un moteur (7) puissant et léger - (électrique ou thermique), un bloc batterie (8) (ou connexion électrique ou réservoir); le moteur (7) compact est fixé sur la partie haute de l'arceau en "n"; le bloc batterie (8) est fixé sur l'arceau en "n" (15) symétriquement par rapport au moteur (7); à proximité de la poignée de poussée (16) se trouve le bouton de mise en route du système avec variateur de vitesse (11); le "système mécanique de coupe rotatif léger" (5) est monté sur les 2 glissières à roulements parallèles (9) à travers les 2 accès (10) qui sont refermés à vis après la mise en place du système et 2 butoirs de déplacement (12) le long des glissières sont verrouillés ; les glissières (9) sont conçues de telle sorte que le "système de coupe" (5) soit solidement maintenu sans que la rigidité de la "fourche basse de la pince manuelle" (4) ne soit compromise ni sa robustesse; les 2 glissières à roulements (9) parallèles situées de part et d'autre de la lame circulaire coupante (6) et qui supportent le "système mécanique de coupe rotatif léger (5) sont d'une longueur telle que la lame rotative dans son déplacement puisse découper totalement l'objet fixé par les mâchoires (3) dont la configuration est adaptée à l'usage de l'outil; sur les parties hautes et basses latérales des mâchoires (3) se trouvent des lames à ressort (22) pour garantir une excellente fixation du matériau ou objet à découper; l'embout des mâchoires présente un "bec" (13) qui permet de couper des câbles, des baguettes, des tiges ou bien de tailler facilement un arbre ou une vigne par exemple : ce bec en position sécurisé de l'outil (pince fermée sans objet et lame circulaire (6) en rotation) permet à un élément de taille réduite (1 centimètre de diamètre au maximum) d'être introduit dans le dispositif au niveau du bec (13) pour être mis en contact avec la lame circulaire coupante (6) en rotation; la sécurité du dispositif est assurée de différentes façons: a) un contacteur (20) est situé entre les 2 bras de la pince (1) et autorise une mise en rotation de la lame (6), b) un capot (21) enveloppe la courroie (14) et les 2 axes : axe rotatif (24) et axe d'entraînement du moteur (25), c) une coque supérieure (17) est fixée sur le bras supérieur en forme de fourche de la pince (1) et une coque inférieure (23) est fixée sur le bras inférieur : ceci protège des projections de coupe, d) les 2 butoirs de déplacement (12) limitent le déplacement du système de coupe (5), e) les lames à ressort (22) permettent une excellente fixation du matériau (ou objet) à couper, f) un arrêt (18) se trouve sur la coque supérieure (17) qui limite le déplacement de la poignée (16) et permet soit de fermer le dispositif, soit de l'utiliser en position sécurisée, g) enfin, le bouton de mise en route (11) avec variateur de vitesse, contrôle la mise en fonction du dispositif ; l'utilisation de l'outil est très simple : après fixation du matériau (ou de l'objet) à couper avec la pince manuelle (1), "le système mécanique de coupe rotatif" (5) est démarré avec le bouton de mise en route (11), puis déplacé par une poussée exercée sur l'arceau (15) ; en cas d'échauffement ou de résistance du matériau à couper, "le système mécanique de coupe rotatif" (5) est momentanément mis en recul ou arrêté tandis que la fixation du matériau (ou de l'objet) à couper reste parfaitement assurée ; l'outil, objet de l'invention, permet de travailler rapidement et facilement avec une grande précision et efficacité en particulier dans des zones sensibles ou contaminées où une opération de coupe ponctuelle doit être rapide et précise; pour couper des matériaux (ou objets) de taille moyenne (d'un diamètre ou d'une longueur inférieure à 10 centimètres) ; cette invention, outil portable et mécanisé concerne l'industrie du bâtiment, les métiers de l'artisanat, de l'agriculture, les domaines du bricolage et du jardinage.

Autrement dit, il s'agit d'un outil de coupe, portable, mécanisé, sécurisé, pour couper divers matériaux, plans, ou cylindriques, d'une taille de 10 centimètres au maximum, caractérisé par la combinaison de 2 parties solidement liées entre elles par 2 glissières à roulements parallèles (9) : la première partie est une pince manuelle (1) (à ressort ou à cliquet (2) ) dont les bras avant se présentent sous la forme de 2 fourches opposées parallèles rigides qui constituent les mâchoires de fixation (3), avec, à l'intérieur de la fourche basse (4), 2 glissières parallèles (9) ; la deuxième partie de l'outil est un système mécanique de coupe rotatif (5) supporté par les 2 glissières parallèles (9) et qui se présente sous la forme d'un arceau rigide en "n" (15) : ce système de coupe est caractérisé par la disposition (dans sa partie antérieure basse) d'un axe rotatif (24) sur lequel est fixé perpendiculairement une lame circulaire coupante (6) spécifique du matériau à couper, tandis que la partie supérieure de l'arceau (15) supporte un moteur (7) (électrique ou thermique) avec son axe d'entraînement (25) et sa source d'énergie (batterie électrique (8) ou réservoir), une courroie (14) relie l'axe d'entraînement du moteur (25) à l'axe rotatif de la lame (24); la mise en place du système de coupe (5) sur les 2 glissières parallèles (9) de la pince se fait au travers de 2 accès (10) verrouillables ; le choix d'un rayon efficace de coupe pour la lame circulaire (6) au moins égal à la plus grande largeur de fixation des mâchoires (3) de la pince (1), la hauteur de disposition des glissières (9) sur la fourche basse (4), la distance de déplacement du système de coupe (5) sur les glissières sont caractérisés en ce qu'ils permettent de toujours réaliser avec l'outil une coupe simple et complète de l'objet fixé ; l'outil est caractérisé en ce que sur les parties hautes et basses latérales des mâchoires (3) se trouvent des lames à ressort (22) pour garantir une excellente fixation du matériau à couper ; l'outil est caractérisé en ce que à l'extrémité des mâchoires (3) de la pince se trouve une ouverture étroite et oblique en forme de "bec" (13-voir PL1/2 Schéma 1B présentation latérale) qui, en tenant compte du sens de rotation de la lame circulaire, permet à un objet de taille réduite (une tige par exemple) d'être, après introduction, entraîné par la lame en rotation, auto-bloqué et coupé ; l'outil est caractérisé par la combinaison de nombreux systèmes de sécurité: butoir de déplacement du système de coupe (12), butoir d'arrêt du déplacement de la poignée de poussée (16), coques de protection externes (17) et (23), contacteur de fermeture de la pince (20), bouton de marche par pression (11) ; l'outil de coupe, objet de l'invention est caractérisé par sa simplicité d'utilisation : a-fixation par la pince du matériau ou objet puis, b-déplacement sur les glissières du système de coupe.

## Revendications

1. Outil de coupe portable, mécanisé, sécurisé, pour couper divers matériaux, plans ou cylindriques, de taille moyenne, ayant un diamètre ou longueur de 10 centimètres au maximum, comportant un système mécanique de coupe rotatif léger (5), avec une lame rotative, lié à un système portable de fixation, qui est une pince (1), **caractérisé en ce que** le système mécanique de coupe rotatif léger (5) est introduit dans la pince (1) grâce à deux glissières à roulements parallèles (9) de la pince qui supportent le système mécanique de coupe léger (5) et permettent son déplacement pour découper le matériau ou objet fixé par la pince (1) et **en ce que** l'outil est autonome.

2. Outil de coupe selon la revendication 1, **caractérisé par** la combinaison de deux parties solidement liées entre elles par deux glissières à roulements parallèles (9) : la première partie est une pince manuelle (1) à ressort ou à cliquet (2) dont les bras avant se présentent sous la forme de 2 fourches opposées parallèles rigides qui constituent les mâchoires de fixation (3), avec, à l'intérieur de la fourche basse (4), deux glissières parallèles (9) ; la deuxième partie de l'outil est un système mécanique de coupe rotatif (5) supporté par les deux glissières parallèles (9) et qui se présente sous la forme d'un arceau rigide en "n" (15) : ce système de coupe est **caractérisé par** la disposition (dans sa partie antérieure basse) d'un axe rotatif (24) sur lequel est fixé perpendiculairement une lame circulaire coupante (6) spécifique du matériau à couper, tandis que la partie supérieure de l'arceau (15) supporte un moteur (7), électrique ou thermique, avec son axe d'entraînement (25) et sa source d'énergie, batterie électrique (8) ou réservoir, une courroie (14) relie l'axe d'entraînement du moteur (25) à l'axe rotatif de la lame (24); la mise en place du système de coupe (5) sur les 2 glissières parallèles (9) de la pince se fait au travers de deux accès (10) verrouillables ; le choix d'un rayon efficace de coupe pour la lame circulaire (6) au moins égal à la plus grande largeur de fixation des mâchoires (3) de la pince (1), la hauteur de disposition des glissières (9) sur la fourche basse (4), la distance de déplacement du système de coupe (5) sur les glissières sont tels qu'ils permettent de toujours réaliser avec l'outil une coupe simple et complète de l'objet fixé ; en ce que sur les parties hautes et basses latérales des mâchoires (3) se trouvent des lames à ressort (22) pour garantir une excellente fixation du matériau à couper ; en ce que à l'extrémité des mâchoires (3) de la pince se trouve une ouverture étroite et oblique en forme de "bec" qui, en tenant compte du sens de rotation de la lame circulaire, permet à un objet de taille réduite, une tige par exemple, d'être, après introduction, entraîné par la lame en rotation, auto-bloqué et coupé ; et par la combinaison de nombreux systèmes de sécurité: butoir de déplacement du système de coupe (12), butoir d'arrêt du déplacement de la poignée de poussée (16), coques de protection externes (17) et (23), contacteur de fermeture de la pince (20), bouton de marche par pression (11) ; l'outil de coupe, objet de l'invention est aussi **caractérisé par** sa simplicité d'utilisation : a) fixation par la pince du matériau ou objet puis, b) déplacement sur les glissières du système de coupe.

## Claims

1. Secure, mechanised portable cutting tool, for cutting various plane or cylindrical materials, of medium size, having a diameter or length of not more than 10 centimetres, comprising a light rotary mechanical cutting system (5), with a rotary blade, connected to a portable fixing system, which is a clamp (1), **characterised in that** the light rotary mechanical cutting system (5) is inserted into the clamp (1) by means of two parallel bearing guides (9) of the clamp supporting the light mechanical cutting system (5) and enabling the movement thereof to cut the material or object fixed by the clamp (1) and **in that** the tool is self-contained.

2. Cutting tool according to claim 1, **characterised by** the combination of two portions securely connected together by two parallel bearing guides (9): the first portion is a manual spring or ratchet (2) clamp (1), the front arms whereof are in the form of two rigid parallel opposing forks forming the fixing jaws (3), with, inside the lower fork (4), two parallel guides (9); the second portion of the tool is a rotary mechanical cutting system (5) supported by the two parallel guides (9) and in the form of a rigid "n"-shaped arch (15): this cutting system is **characterised by** the arrangement (in the lower front portion thereof) of a rotary shaft (24) whereon a specific circular cutting blade (6) for the material to be cut is fixed in a perpendicular fashion, whereas the upper portion of the arch (15) supports an electric or thermal engine (7), with the drive shaft (25) thereof and the power source thereof, electric battery (8) or tank, a belt (14) connects the drive shaft of the engine (25) to the rotary shaft of the blade (24); the positioning of the cutting system (5) on the two parallel guides (9) of the clamp is performed via two lockable ports (10); the choice of an effective cutting radius for the circular blade (6) at least equal to the greatest fixing width of the jaws (3) of the clamp (1), the arrangement height of the guides (9) on the lower fork (4), the movement distance of the cutting system (5) on the guides are such that they always enable simple and complete cutting of the fixed object with the tool; in that, on the upper and lower side portions of the jaws (3), spring blades (22) are positioned to ensure excellent fixing of the material to be cut; in that, at the end of the jaws (3) of the clamp, a narrow oblique "mouth"-shaped opening is positioned which, accounting for the direction of rotation of the circular blade, enables a small object, a rod for example, to be, after insertion, rotated by the blade, self-locked and cut; and by the combination of numerous safety systems: cutting system movement stop (12), thrust handle movement end stop (16), outer protective shells (17) and (23), clamp closure contactor (20), power-on push button (11); the cutting tool according to the invention is **characterised by** the simplicity of use thereof: a) fixing of the material or object by the clamp and, b) movement on the guides of the cutting system.

## Patentansprüche

1. Tragbares, mechanisiertes, gesichertes Schneidewerkzeug, um verschiedene flache oder zylindrische Materialien von mittlerer Größe zu schneiden, die einen Durchmesser oder eine Länge von höchstens 10 Zentimetern aufweisen, umfassend ein leichtes drehendes mechanisches Schneidesystem (5) mit einer drehenden Klinge, verbunden mit einem tragbaren Befestigungssystem, das eine Zange (1) ist, **dadurch gekennzeichnet, dass** das leichte drehende mechanische Schneidesystem (5) mit Hilfe von zwei parallelen Rollengleitern (9) der Zange in die Zange (1) eingeführt wird, die das leichte mechanische Schneidesystem (5) tragen und seine Verschiebung ermöglichen, um das Material oder Objekt, das von der Zange (1) fixiert ist, zu schneiden, und **dadurch**, dass das Werkzeug autonom ist.

2. Schneidewerkzeug nach Anspruch 1, **gekennzeichnet durch** die Kombination von zwei Teilen, die **durch** zwei parallele Rollengleiter (9) fest untereinander verbunden sind: der erste Teil ist eine manuelle Zange (1) mit einer Feder oder einer Sperrklinke (2), deren vordere Arme die Form von 2 starren, parallelen, gegenüberliegenden Gabeln aufweisen, die die Befestigungsbacken (3) darstellen mit, im Inneren der unteren Gabel (4), zwei parallelen Gleitern (9); der zweite Teil des Werkzeugs ist ein drehendes mechanisches Schneidesystem (5), das von den zwei parallelen Gleitern (9) getragen wird, und das die Form eines starren "n"-förmigen Bogens (15) aufweist: dieses Schneidesystem ist **gekennzeichnet durch** die Anordnung (in seinem unteren vorderen Teil) einer Drehachse (24), auf der senkrecht eine runde Schnittklinge (6), spezifisch für das zu schneidenden Material, befestigt ist, während der obere Teil des Bogens (15) einen elektrischen Motor oder Verbrennungsmotor (7) mit dessen Antriebsachse (25) und dessen Energiequelle, einer elektrische Batterie (8) oder einem Tank, trägt, wobei ein Riemen (14) die Antriebsachse des Motors (25) mit der Drehachse der Klinge (24) verbindet; die Bereitstellung des Schneidesystems (5) auf den 2 parallelen Gleitern (9) der Zange erfolgt über zwei feststellbare Zugänge (10); die Auswahl eines wirksamen Schneideradius für die Rundklinge (6), mindestens gleich der größten Befestigungsbreite der Backen (3) der Zange (1), die Höhe der Anordnung der Gleiter (9) auf der unteren Gabel (4), der Verschiebungsabstand des Schneidesystems (5) auf den Gleitern sind derart, dass sie ermöglichen, mit dem Werkzeug immer einen einfachen und vollständigen Schnitt des befestigten Objekts durchzuführen: **dadurch**, dass sich auf den oberen und unteren seitlichen Teilen der Backen (3) Federklingen (22) befinden, um eine ausgezeichnete Fixierung des zu schneidenden Materials zu garantieren; **dadurch**, dass sich am Ende der Backen (3) der Zange eine enge und schräge Öffnung in Form eines "Schnabels" befindet, die, unter Berücksichtigung der Drehrichtung der Rundklinge, ermöglicht, dass ein Gegenstand von reduzierter Größe, z.B. ein Schaft, nach der Einführung von der Drehklinge mitgeführt, selbst gesperrt und geschnitten wird; und **durch** die Kombination von zahlreichen Sicherheitssystemen: Verschiebungsanschlag des Schneidesystems (12), Anschlag zum Stopp der Verschiebung des Schiebegriffs (16), äußere Schutzschalen (17) und (23), Schließschalter der Zange (20), Einschaltknopf **durch** Druck (11); das Schneidewerkzeug, das Gegenstand der Erfindung ist, ist auch **durch** die Einfachheit seiner Verwendung **gekennzeichnet**: a) Befestigung des Materials oder Objekts durch die Zange, dann b) Verschiebung auf den Gleitern des Schneidesystems.
